Europäisches Patentamt

(19) **European Patent Office**

**Office européen des brevets**

(11) Publication number: **0 004 846**

**A1**

(12) # EUROPEAN PATENT APPLICATION

(21) Application number: **78300191.0**

(22) Date of filing: **25.07.78**

(51) Int. Cl.²: **C 04 B 43/00**
**E 06 B 5/16, E 04 B 1/94**

(30) Priority: **20.04.78 GB 1565078**
**26.05.78 GB 1565078**

(43) Date of publication of application:
**31.10.79 Bulletin 79/22**

(84) Designated Contracting States:
**BE DE FR NL**

(71) Applicant: **CROSBY & CO. LIMITED**
**Newnhams West Street**
**Farnham Surrey, GU9 7EQ(GB)**

(72) Inventor: **Dixon, Maurice**
**Derwent Lodge Longhope Drive**
**Farnham Surrey(GB)**

(72) Inventor: **Croker, Charles Walter**
**Wellesey Road Tilford**
**Nr. Farnham Surrey(GB)**

(72) Inventor: **Barrett, Eric Archie**
**144a, Aldershot Road**
**Fleet Hampshire(GB)**

(74) Representative: **Harrison, Michael Robert et al,**
**Urquhart-Dykes & Lord Tower House Merrion Way**
**Leeds LS2 8PB(GB)**

(54) **Heat resistant composition and method for preparation thereof.**

(57) A heat resistant, thermally insulating composition comprising inorganic filler, a light weight, organic filler, a silicate binder and a component which swells or intumesces when subjected to heat. A method of preparation and a use of the composition are also described.

FIG.1

EP 0 004 846 A1

- 1 -

HEAT RESISTANT COMPOSITION AND METHOD FOR
PREPARATION THEREOF

This invention relates to heat resistant and thermally
insulating compositions.

According to the present invention there is provided a
heat resistant, thermally insulating composition
characterised in that the composition comprises inorganic
filler, a light weight, organic filler, a silicate binder
and a component which swells or intumesces when subjected
to heat.

The above materials are chosen so as to give rise to a
composition which is light weight and can be manufactured
in slab form for use as, for instance, cores for doors
and panels. The composition can also be moulded into
virtually any shape.

The present invention also provides a method for making a
composition in accordance with the present invention, the
method including the steps of forming an aqueous slurry
in which the silicate is present at least partially in a
dissolved form and allowing the slurry to set.

The inorganic filler is preferably pulverised fly ash
(PFA). Typically this material has a water content of
20% and a chemical analysis as follows:-

| | |
|---|---|
| $SiO_2$ | 60% |
| $Al_2O_3$ | 27% |
| trace metals | 11.7% |
| water solubles | 1.3% |

The particles of the pulverised fly ash are hollow, spherical particles obtained as a product of the burning of pulverised fuel and are known as bulk cenospheres. Other inorganic light weight fillers with good fire resistant properties can be used in addition to or instead of the bulk cenospheres, examples being expanded perlite and expanded vermiculite.

The light weight organic filler may be, for instance, wood waste, sawdust, shavings, chippings up to about 3 mm diameter, expanded polystyrene beads (preferably of from 2 to 3 mm diameter and average density 15 to 29 $kgs/m^3$), scrap cork granules with diameter up to about 3 mm, granulated scrap urethane foam with diameter up to about 3 mm and granulated scrap expanded polystyrene with diameter up to about 3 mm.

The incorporation of the organic light weight filler in the matrix of the composition of the invention means that under fire conditions the organic material will "burn out" leaving behind an insulating honeycomb comprising the inorganic material.

The silicate binder is preferably an alkali metal silicate and more preferably sodium silicate. With the latter the preferred weight ratio of $SiO_2$ to $Na_2O$ is between 2.5 and 3.3.

The choice of silicate used depends on the degree of flexibility required for the final product and also the desired setting rate which will suit the particular
manufacturing process involved.

The component which intumesces when subjected to heat is
preferably raw perlite ore. A typical chemical analysis
of such ore is as follows:-

| | |
|---|---|
| $SiO_2$ | 74% |
| $Al_2$ | 15% |
| $K_2O$ | 4% |
| $Na_2O$ | 3% |
| CaO | 1% |
| trace metals | 1% |
| $H_2O$ | 2% |

The presence of the intumescent material means that when
the composition is subjected to high temperatures as in
fire situations it intumesces and therefore the
composition will expand. Where the composition is, for
instance, the core of a door and is subjected to fire
conditions on one side of the door the composition will
intumesce on that side of the door and expand to grip
the door frame so avoiding any danger of the core falling
out. Additionally the intumescence also increases the
thickness of the core so improving the thermal
insulation of the core. In this way there is less
danger of the heat extending through the core to the
far side. At the same time the organic component in the
core will burn out on that side of the core adjacent the
fire and the overall result is an expanded honeycomb
matrix on one side merging into the original composition
on the other side of the core.

The fire resistance of the composition can be varied by varying the proportions of the ingredients in the composition. The composition can be manufactured to densities within a wide range, for instance, from 150 $kg/m^3$ to 600 $kg/m^3$. A composition in accordance with the present invention has excellent mechanical properties, for instance, compression and shear strength. If desired the strength etc. can be increased for particular applications by the addition of reinforcing fibres such as ceramic fibres, glass fibres, steel fibres and asbestos fibres.

As mentioned above the composition is such that when the organic material is burnt out, a fire resistant and heat insulating honeycomb remains. This honeycomb prevents release of any gases which may be present due to the burning of the light weight organic filler.

A composition in accordance with the present invention does not shrink or swell when immersed in water. It is unaffected by acids, alkali or organic solvent. It can be bonded by most conventional adhesives to most constructional materials.

If desired the composition may include extenders which during the preparation of the composition increase the dispersion of the other components in the slurry. Examples of such extenders are calcium carbonate, titanium oxide, barium sulphate and kaolin.

Setting agents may be incorporated in the slurry to enable the silicate binder to set more effectively and/or more quickly. Preferably the setting agents are organic esters which act as catalysts to cause the sodium silicate to set and harden rapidly. More preferably the esters used are a combination of ethylene glycol diacetate and diacetin. These two esters are preferably combined in a ratio of from 1:9 to 9:1. This will give a range of initial setting times of from 2 minutes to 2 hours depending on the particular ratio chosen.

A typical method of preparation of a composition in accordance with the present invention is as follows. A slurry is made using a high speed reversible turbo mixer operating at a speed of approximately 1,000 rpm. Sodium silicate binder is put into the mixer first followed by kaolin. After mixing for approximately 30 seconds in each direction to ensure complete dispersion, raw perlite and cenospheres are then added and mixed for approximately 1 minute. The resultant slurry can then be stored in closed drums or a tank for future use in making the composition of the invention.

A composition is then made using a continuous mixer with a metered discharge rate. The above-mentioned slurry and light weight filler or fillers are loaded into an OMEGA or PACEMASTER type mixer. These mixers incorporate a catalyst pump which doses the composition with a catalyst in the final stages of the mixing.

After mixing the composition is discharged into a mould and allowed to remain in the mould until the intial set has taken place, for instance, 5 minutes after the catalyst has been added. The resultant slab of material is then allowed to air dry at ambient temperature for 48 hours or is warm air dried at 30 to $40^{\circ}C$ for 2 hours. The slab can be stored for future use or used immediately in a finished product such as a fire resistant and heat insulating door.

Sodium silicate is a strong adhesive depending on loss of water for its adhesive properties. Sodium silicate films will, however, rehydrate in conditions of high humidity. Complete insolubility is only achieved by a chemical reaction between the sodium silicate and other materials. The setting of the silicate is believed to take place in two stages. First the ester is hydrolysed by hydroxyl ions present in the solution. This gives the initial set. Secondly the formation of a silica hydrogel takes place as the acid which is released from the hydrolysis reaction reacts with the sodium silicate. This silica hydrogel binds together the fillers in the composition. Thus there is a slow build up of strength of the composition.

As mentioned above the composition may include extenders which increase the dispersion of the other components in the slurry. The addition of an extender such as ultra-fine calcium carbonate both decreased the thixotropic properties of the slurry with only a slight increase in the viscosity of the mixture, and also combines slowly with the sodium silicate to give an insoluble product.

The composition can be made water resistant or insoluble by the addition of, for instance, sodium fluosilicate in the amount of between 5 and 25% by weight based on the weight of the sodium silicate. Further the composition may be made water repellent by the addition of, for instance, the Dow Corning product methyl siliconate in an amount of about 1 or 2% by weight based on the weight of the sodium silicate.

A preferred density range for a composition in accordance with the present invention is from 250 to

$350 \text{ kg/m}^3$.

Examples of sodium silicates which can be used in the present invention are the following grades manufactured by ICI: E100 ALKALINE, H100 ALKALINE, K95 ALKALINE, L96 ALKALINE, M95 Neutral, P84 Neutral, Q79 Neutral and Q70 Neutral.

Preferably the amount of pulverised fly ash in the composition is from 25 to 150 $\text{kg/m}^3$, more preferably from 50 to 100 $\text{kg/m}^3$.

Preferably the amount of raw perlite in the composition is from 20 to 100 $\text{kg/m}^3$, more preferably from 25 to 50 $\text{kg/m}^3$.

Preferably the amount of bulk cenospheres in the composition is from 25 to 150 $\text{kg/m}^3$, more preferably from 50 to 100 $\text{kg/m}^3$.

Preferably the amount of kaolin or other inorganic extender in the composition is from 20 to 100 $\text{kg/m}^3$, more preferably from 25 to 50 $\text{kg/m}^3$.

Preferably the amount of polystyrene in the composition is from 15 to 30 $\text{kg/m}^3$, more preferably from 20 to 25 $\text{kg/m}^3$. The volume of polystyrene used is approximately equal to or even slightly greater than the volume of the slab or panel or whatever article is being made. There will in fact be a considerable variation in the weight range of the organic filler depending on the particular material used.

The amount of water used is sufficient to form a slurry of desired viscosity.

The composition may also include reinforcing agents. For instance in the case of glass fibre the composition may contain from 1 to 5 kg/m$^3$, preferably from 2 to 3 kg/m$^3$.

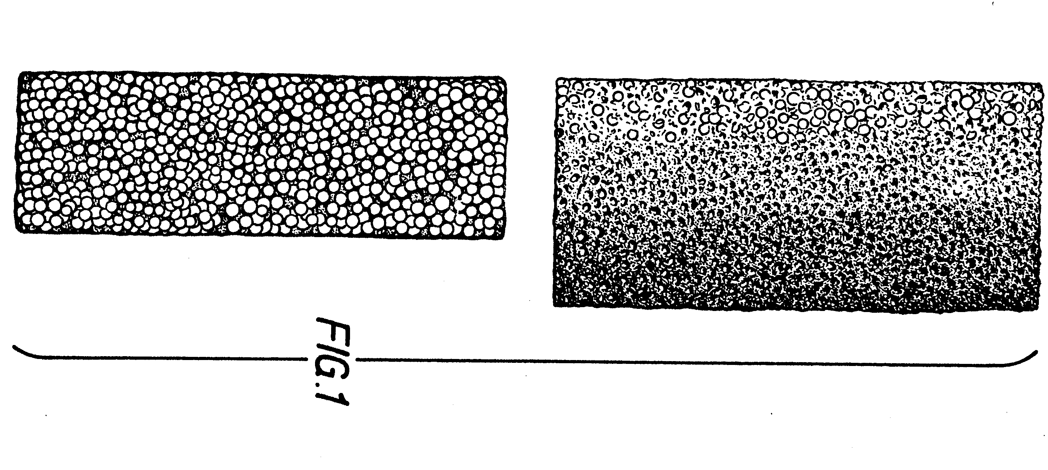

Figure 1 shows a typical sample of a composition of the invention, the figure being a side elevation of a portion of a slab of a composition before and after heat is applied to one face thereof. The lower view shows a sample before heat is applied and it can be seen that the composition comprises closely packed beads of polystyrene bound together by the remaining components of the composition. Heat has been applied to the right hand face of the composition and the heat is sufficient to burn out the polystyrene beads over a substantial thickness of the composition. Furthermore the raw perlite in the composition has intumesced with a result that the slab sample has expanded in a direction to the right as seen in the figure. The result is a slab of increased thickness. On the right hand side the slab is a honeycomb structure and on the left the slab is more or less in its original form. The increased thickness and the honeycomb structure gives the slab increased fire resistance which makes it more effective as a component of, for instance, fire resistance doors.

An example of a composition in accordance with the present invention has the following constitution:-

|  | Weight (kg/m$^3$) | Apparent Density | Volume (litres/m$^3$) |
| --- | --- | --- | --- |
| Silicate (L96) | 200 | 1.480 | 135 |
| Water | 20 | 1.000 | 20 |
| Kaolin | 25 | 500 | 50 |
| Raw perlite ore | 25 | 1.200 | 21 |

| | | | |
|---|---|---|---|
| Pulverised fly ash (PFA) | 50 | 400 | 125 |
| Glass fibre | 2 | not known | not known |
| Polystyrene | 20 | 20 | 1.000 |
| Ester | 10 | 1.000 | 10 |

The following further examples of compositions in accordance with the present invention were prepared:-

| | Ex 2 | Ex 3 | Ex 4 |
|---|---|---|---|
| Silicate binder (L96) | 1.2 | 1.25 | 1.4 |
| Water | 0.1 | 0.12 | 0.14 |
| Kaolin | 0.3 | 0.5 | 0.5 |
| Raw perlite ore | 0.2 | 0.2 | 0.25 |
| PFA | 1.0 | 1.3 | 1.5 |
| Esters (diacetin/EGDA 40/60) | 0.1 | 0.12 | 0.14 |
| Polystyrene | 10.5 | 10.5 | 10.5 |
| Density (kg/m$^3$) | 260 | 300 | 350 |

In the above table the amounts of the components are in litres.

The compositions of Examples 2 to 4 were tested as half hour cores for doors in the following fire tests. The tests were performed on a specimen panel of overall size 1018 mm high by 1055 mm wide by 93 mm thickness. The specimen panel was made by fixing together three separate panels, contained within a frame, which were representative of door construction. The three perimeter frames were made of softwood size 93 mm wide by 56 mm thick to an overall size of 1020 mm high by 350 mm wide. Planted door stops of size 25 mm by 40 mm were fixed to inside perimeter edges of the frame.

The door panels were made to an overall size of 943 mm high by 275 mm wide by 44 mm thick. The core contained a perimeter frame of softwood of size 36 mm by 40 mm wide since the panel was faced on each side with 4 mm thick plywood which was bonded to the core and frame of the panel. The perimeter edges of the panel contained two separate rolls of intumescent strips, each of size 10 mm wide by 2 mm thick which were fitted into matching grooves. The panels were secured by 75 mm steel wood screws to the upper frame member and one vertical frame member such that the opposite side edges, contained a gap of similar width to that obtained between a door and a door frame.

The three frames containing the panels were secured to each other by 6 mm diameter nuts and bolts and a 17 mm thick wood batten and secured with nails across the top and bottom edges of all three frames.

The specimen assembly was fixed to the furnace such that the door stops faced the laboratory.

The specimen panel assembly formed one face of a one metre square gas-fire furnace, the temperature rise of which was controlled to conform with the relationship given in BS476:Part 8:1972. The temperature of the unexposed face of each specimen panel was measured by one thermocouple placed centrally on each panel of the unexposed face.

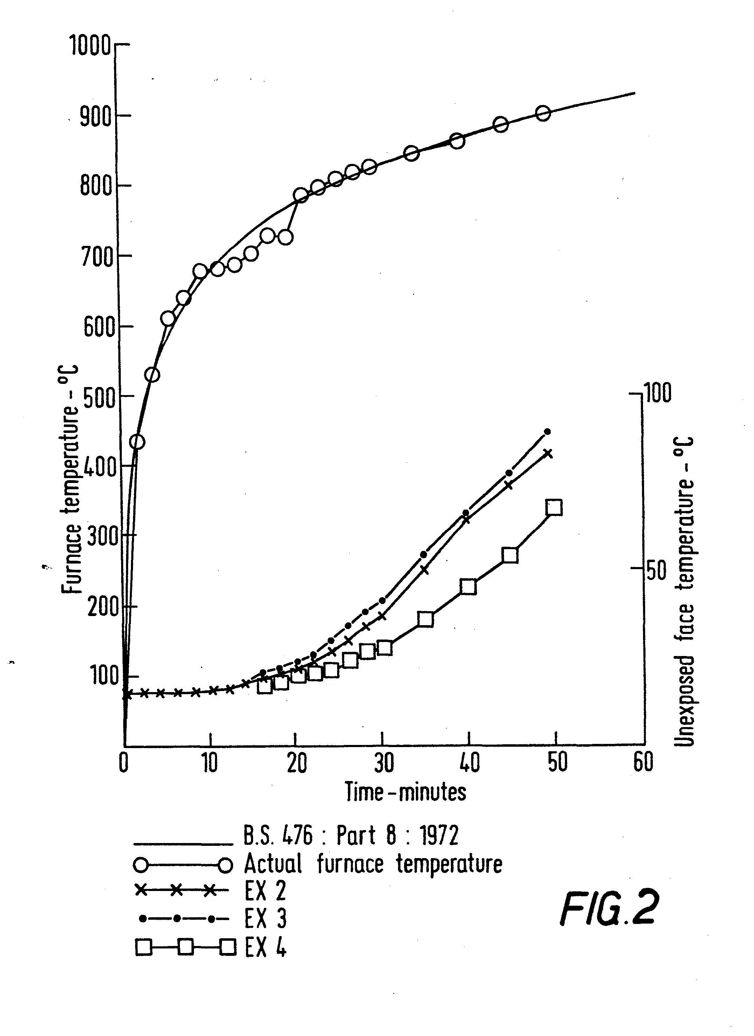

Figure 2 is a graph showing furnace temperature rise in relation to the time/temperature curve given in BS476: Part 8:1972 and the unexposed face temperature rise recorded on each panel. After thirty minutes all three panels were maintaining their integrity and insulation and the same was true after forty five minutes. Only after forty nine minutes were char marks visible across the top of the panels made from the cores of Examples 2 and 4.

The following further compositions in accordance with
the present invention were prepared:-

|  | Ex 5 | Ex 6 | Ex 7 | Ex 8 |
|---|---|---|---|---|
| Silicate* | 1.5 | 1.5 | 1.5 | 1.6 |
| Water | 0.1 | 0.1 | not known | not known |
| Kaolin | 0.25 | 0.25 | 0.25 | 0.3 |
| Winnofield S (calcium carbonate) | 0.25 | - | - | - |
| Raw perlite ore | 0.25 | 0.25 | 0.25 | 0.3 |
| PFA | 2.25 | 3.0 | 2.5 | 3.0 |
| Esters $\neq$ | 0.1 | 0.1 | 0.1 | 0.12 |
| Polystyrene | 10.0 | 10.0 | 10.1 | 12.0 |
| Density (kg/m$^3$) | 350 | 425 | 275 | 340 |

\* The silicate of Examples 5 and 6 is ICI grade M75 and
that of Examples 7 and 8 is ICI grade P84.

$\neq$ The esters used in Examples 5 and 6 were diacetin/
EGDA 40/60 and those for Examples 7 and 8 were
diacetin/EGDA 10/90.

The compositions of Examples 5 to 8 were tested as one
hour cores for doors. The test was performed on a
specimen panel of overall size 1200 mm high by 1000 wide
by 92 mm thickness. The specimen panel contained four
separate panels which were representative of door
construction. The perimeter frame consisted of softwood
of size 92 mm wide by 33 mm thick. The frame was
divided into four equal sections by a central vertical
and horizontal softwood member of size 92 mm wide by
33 mm thick. Planted softwood rebates of 25 mm width
were fixed to the vertical sides and upper horizontal
edges of the frame such that the four sections of the frame assembly were representative of door frame construction. The central vertical door frame member and the rebates were protected with a SUPALUX board manufactured by Cape Boards and Panels Limited. The frame was bonded together with an epoxide resin based adhesive.

The Example 5 core was in three separate pieces. The frame of the door consisted of hardwood of size 44 mm wide by 38 mm thick. The door panel consisted of plywood of 4 mm thickness. The components of the door panel were bonded together by using a urea formaldehyde adhesive. The perimeter edges of the door panel contained two separate rows on intumescent strips, each of size 10 mm wide by 2 mm thick which were fitted into matching grooves. The panel was secured with 75 mm long steel wood screws to the frame at two positions on one vertical edge and one position on the upper edge such that the opposite side edges contained a gap of similar width to that obtained between a door and a door frame.

The door including the core of Example 6 was constructed and fixed similarly to that of Example 5 except that the core was fixed in two separate pieces.

The door including the core of Example 7 was constructed and fixed similarly to that of Example 5 except that the frame for the door panel was made by laminating together four pieces of softwood each of 9 mm thickness and the core was fitted in one piece.

The door including the core of Example 8 was constructed and fixed similarly to that for Example 7.

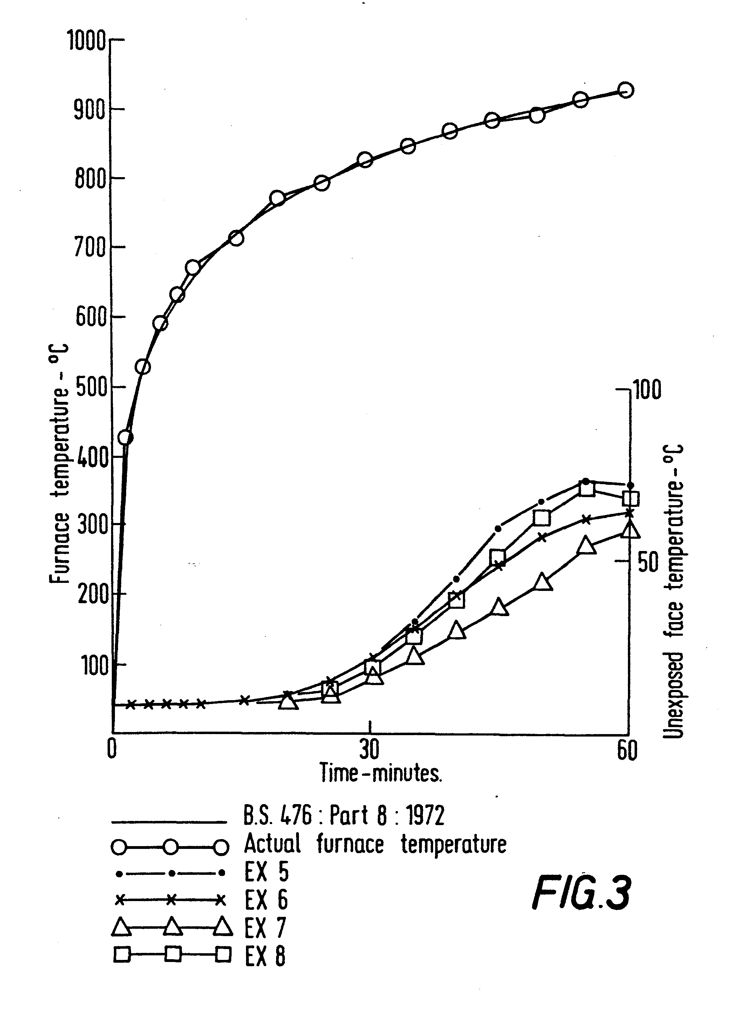

The test was carried out similarly to that for Examples 2 to 4 and the graph of Figure 3 shows the furnace temperature rise in relation to the time/temperature curve in BS476:Part 8:1972 and the temperature rise measured on the unexposed face on each panel. After sixty minutes the panels were maintaining their integrity and insulation.

The following further composition in accordance with the present invention was prepared, in this case using woodchips as the organic filler:-

| Component | Example 9 Amount (kg) |
|---|---|
| Woodchips | 180 |
| Dow Corning 772 water repellent (12/1 solution) | 9 |
| Sodium silicate (Q79) | 150 |
| Kaolin | 15 |
| Raw perlite ore | 20 |
| PFA (approx. 20% moisture content) | 100 |
| Sodium fluosilicate | 7.5 |
| EGDA | 3.75 |

In order to prepare the composition the woodchips were sprayed with the water repellent and then dried to a moisture content of approximately 8%. The resultant chips were mixed with the remaining components and the resultant mix located in moulds and pressed to the required thickness. After remaining in the press for approximately two minutes the moulds were removed and the composition air dried for two days at $40^{o}$C. The above-quoted amounts of components are sufficient to make about $1m^3$ of the final composition.

The resultant composition was tested in a similar manner to that described above for the compositions containing polystyrene. The material had a dry density of 400 $kg/m^3$.

It exhibited better resistance to fire than the polystyrene-based composition in addition to being of greatly increased compression strength. Further moulded compositions were reduced in weight by about 20% by the provision of a series of holes through the centre of the composition. Tests showed that the composition was still adequate for fire resistance properties.

After being immersed in water for seven days the composition of Example 9 showed no signs of breaking down or swelling although this normally occurs with conventional wood-based boards.

Claims:

1. A heat resistant, thermally insulating composition characterised in that the composition comprises inorganic filler, a light weight, organic filler, a silicate binder and a component which swells or intumesces when subjected to heat.

2. A composition according to claim 1 characterised in that the inorganic filler is pulverised fly ash.

3. A composition according to claim 1 or claim 2 characterised in that the organic filler is polystyrene.

4. A composition according to claim 1 or claim 2 wherein the organic filler is woodchips.

5. A composition according to any of the preceding claims characterised in that the silicate binder is an alkali metal silicate.

6. A composition according to any of the preceding claims characterised in that the component which swells or intumesces when subjected to heat is raw perlite ore.

7. A composition according to any of the preceding claims characterised in that the composition includes at least one organic ester.

8. A composition according to claim 7 characterised in that the composition includes ethylene glycol diacetate and diacetin.

9. A composition according to any of the preceding claims characterised in that the composition includes

50 - 100 kg/m$^3$ pulverised fly ash, 25 - 50 kg/m$^3$ raw perlite ore together with 20 - 25 kg/m$^3$ polystyrene or 150 - 200 kg/m$^3$ woodchips, sodium silicate having a weight ratio of $SiO_2$ to $Na_2O$ of from 2.5 to 3.3, and ethylene glycol diacetate and diacetin in a ratio of from 1:9 to 9:1.

10. A method of making a composition as claimed in any of the preceding claims, the method characterised in that it includes the steps of forming an aqueous slurry in which the silicate is present at least partially in a dissolved form and allowing the slurry to set.

1/3

0004846

FIG.1

2/3

FIG.2

FIG.3

European Patent Office

**EUROPEAN SEARCH REPORT**

Application number

EP 78 300 191.0

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| X | DE - A - 2 301 228 (AIKOH CO.) <br> * claims 5, 11 and 12, pages 5 to 9 * <br> --- | 1,4-6, 9, 10 | C 04 B 43/00 <br> E 06 B 5/16 <br> E 04 B 1/94 |
| | DE - B - 2 007 196 (AIKOH CO.) <br> * claim 1 * <br> --- | 1,4,6, 9,10 | |
| A | US - A - 3 881 947 (PALMER) <br> * claim 1 * <br> --- | 5,7-9 | **TECHNICAL FIELDS SEARCHED (Int.Cl.²)** |
| A | GB - A - 1 158 460 (GRACE & CO.) <br> * claim 1 * <br> --- | 1,4,6 | C 04 B 19/04 <br> C 04 B 21/00 <br> C 04 B 31/00 <br> C 04 B 43/00 |
| A | DE - A - 2 535 342 (J. LAKATOS) <br> --- | 3-5 | E 04 B 1/94 <br> E 06 B 5/16 |
| A | US - A - 3 916 057 (HATCH et al.) <br> * claim 1 * <br> --- | 1 | |
| A | GB - A - 1 468 239 (F.W.A. KURZ) <br> ---- | 2 | **CATEGORY OF CITED DOCUMENTS** <br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |

X &: member of the same patent family, corresponding document

The present search report has been drawn up for all claims

| Place of search | Date of completion of the search | Examiner |
|---|---|---|
| Berlin | 11-07-1979 | HÖRNER |

EPO Form 1503.1 06.78